# EUROPÄISCHE PATENTSCHRIFT

(11) **EP 0 690 087 B1**
(45) Veröffentlichungstag und Bekanntmachung des Hinweises auf die Patenterteilung: **06.09.2000**
(21) Anmeldenummer: 95100489.4
(22) Anmeldetag: 16.01.1995
(51) Int. Cl.: C08G 63/16, C08G 63/20, C08G 63/60, C08G 63/52, C08G 69/44, C09D 7/06, C09D 5/44

(54) **Polyester als Additiv in Beschichtungsmitteln**
Polyester as additive in coating compositions
Polyester comme additif dans des compositions de revêtement

(30) Priorität: 01.07.1994 DE 4423141
(43) Veröffentlichungstag der Anmeldung: 03.01.1996
(73) Patentinhaber: HOECHST AKTIENGESELLSCHAFT, 65926 Frankfurt am Main (DE)
(72) Erfinder: Schafheutle, Markus A., Dr., D-65239 Hochheim (DE); Völker, Achim, Dr., D-65197 Wiesbaden (DE); Wehner, Susanne, D-65606 Villmar (DE); Walz, Gerd, Dr., D-65207 Wiesbaden (DE); Zöller, Joachim, Dr., D-55128 Mainz (DE)
(74) Vertreter: Zounek, Nikolai, Dipl.-Ing.

(56) Entgegenhaltungen:
- EP-A- 0 443 605
- EP-A- 0 546 494
- WO-A-83/02621
- AT-A- 375 085
- GB-A- 2 089 824
- US-A- 4 393 121
- DATABASE WPI Section Ch, Week 9320 Derwent Publications Ltd., London, GB; Class A23, AN 93-164722 XP002043899 & JP 05 098 209 A (KANSAI PAINT CO LTD) , 20.April 1993

## Beschreibung

Die Erfindung betrifft wasserdispergierbare sowie lösliche Polyester und ihre Verwendung als Additiv in Beschichtungsmitteln.

Das Verfahren der Elektrotauchlackierung hat sich bei der Beschichtung von Blechen als vorteilhaft erwiesen. Bei der kataphoretischen Beschichtung von verzinkten Blechen mit den üblicherweise verwendeten Bindemitteln zeigen sich Oberflächenstörungen im eingebrannten Film vor allem bei höheren Abscheidespannungen, die erforderlich sind, um große Schichtdicken zu erreichen.

In der JP-A 05-098 209 wird ein Polyesterharz beschrieben, das durch Kondensation aus Phthalsäureanhydrid, Isophthalsäure, Adipinsäure, Trimethylopropan und Neopentylglykol erhältlich ist und als Bindemittel für wäßrige Lacke eingesetzt wird. In der US-A 4,393,121 wird ein wärmehärtbarer Polyester beschrieben, aufgebaut aus Cyclohexandimethanol, Adipinsäure, Neopentylglykol, Propyplenglykol oder Butandiol und Isophthalsäure. In der EP-A 0 443 605 werden niedermolekulare Hydroxylgruppen-terminierte Polyester der Formel

HO-(-R'-O-CO-R-CO-O-)ₙ-R'-OH

mit n= 1 bis 6 und R und R' = Alkylen oder Arylenreste oder deren Mischungen, als Additiv für kathodische Tauchlacke beschrieben, die die Steinschlagfestigkeit, die Haftung und den Filmaufbau verbessern.

In der Patentanmeldung EP-A-0 569 842 werden Urethane beschrieben, die bei Zusatz zu kationischen Elektrotauchlackbädern (ETL-Bädern) diese Erscheinungen verhindern können. Diese Urethane sind niedermolekulare Verbindungen und unterliegen daher unterschiedlichen Zulassungsbestimmungen in verschiedenen Staaten. Die toxikologischen Eigenschaften solcher Verbindungen sind nicht ganz unbedenklich. Weiter sind sie nicht mit allen üblicherweise verwendeten Bindemitteln gleich verträglich. Besonders bei dickeren Beschichtungen kann es zu ungleichmäßiger Verteilung im Film kommen, dies äußert sich ebenfalls in Oberflächenstörungen.

Die Aufgabe der Erfindung besteht daher darin, Additive zur Verfügung zu stellen, die toxikologisch sicher unbedenklich sind und mit den üblichen Bindemittel besser verträglich sind und als Zusatz zu Elektrotauchlackbädern die Entstehung von Oberflächenstörungen bei der Beschichtung von verzinkten Blechen unterdrücken und den Auftrag dickerer Schichten ermöglichen.

Überraschenderweise ergab sich, daß bestimmte, erfindungsgemäße Polyester in Form von Dispersionen und Lösungen beim Zusatz zu ETL-Bädern diese Oberflächenstörungen unterdrücken können und den Auftrag fehlerfreier dickerer Beschichtungen ermöglichen. Die erfindungsgemäßen Polyester sind toxikologisch unbedenklich und mit den üblicherweise bei der kataphoretischen Tauchlackierung verwendeten Bindemitteln bestens verträglich.

Die erfindungsgemäßen Polyester sind erhältlich durch Umsetzung von
(A) 5 bis 50 Teilen mindestens eines linearen oder verzweigten aliphatischen oder cycloaliphatischen mindestens zweiwertigen Alkohols,
(B) 2 bis 40 Teilen mindestens einer mindestens zweiwertigen aromatischen Carbonsäure,
(C) 0 bis 40 Teilen mindestens eines 2-Alkenyl-dicarbonsäureanhydrids,
(D) 10 bis 30 Teilen mindestens einer mindestens zweiwertigen linearen oder verzweigten aliphatischen Carbonsäure,
(E) 0 bis 15 Teilen einer aliphatischen linearen oder verzweigten Hydroxysäure,
(F) 2 bis 15 Teilen eines aliphatischen linearen oder verzweigten Polyamins mit mindestens einer primären und mindestens einer sekundären oder tertiären Aminogruppe,
(G) 0 bis 15 Teilen eines Glycidylesters einer verzweigten aliphatischen Monocarbonsäure oder eines Glycidyläthers eines verzweigten aliphatischen Alkohols, und
(H) 0 bis 15 Teilen eines oder mehrerer Polyhydroxyamine.

Unter "Teilen" und "%" werden hier und im Folgenden stets Massenanteile (Gewichtsteile) verstanden. Die Anteile der einzelnen Komponenten (A) bis (H) sind so zu wählen, daß die Summe der Massenanteile stets 100 bzw. 100 % ergibt.

Die mehrwertigen Alkohole (A) sind ausgewählt aus den linearen aliphatischen Diolen (A1), den verzweigten aliphatischen Diolen (A2), den cycloaliphatischen Diolen (A3), den drei- oder mehrwertigen linearen aliphatischen Alkoholen (A4) und den drei- oder mehrwertigen verzweigten aliphatischen und cycloaliphatischen Alkoholen (A5) mit jeweils bis zu 20, vorzugsweise bis zu 15 C-Atomen. Der Massenanteil der Verbindungen (A), die einzeln oder in Mischung von mehreren Verbindungen eingesetzt werden können, beträgt 5 bis 50 %, vorzugsweise 10 bis 45 %, besonders bevorzugt 15 bis 40 %.

Geeignete Verbindungen (A1) sind aliphatische Diole mit 2 bis 16 C-Atomen, beispielsweise die 1,2-Diole wie Äthylen-, Propylen- und Butylenglykol und die *α,ω*-Diole wie Propandiol-1,3, Butandiol-1,4, Hexandiol-1,6 und Dodecandiol-1,12.

Geeignete verzweigte aliphatische Diole (A2) mit 4 bis 16 C-Atomen sind beispielsweise Isobutylenglykol, Neopentylglykol, Pinakol, 3-Methyl-1,2-butandiol und 3,4-Diäthyl-3,4-hexandiol.

Geeignete cycloaliphatische Diole (A3) mit 6 bis 15 C-Atomen sind zum Beispiel Cyclohexandiol, Cyclohexandimethanol oder perhydriertes Bisphenol A.

Geeignete mehrwertige lineare aliphatische Alkohole (A4) mit 3 bis 10 C-Atomen sind beispielsweise Glycerin, Erythrit, Arabit, Adonit, Xylit, Mannit, Sorbit, Perseit und Volemit.

Geeignete mehrwertige verzweigte aliphatische Alkohole (A5) mit 5 bis 15 C-Atomen sind beispielsweise Trimethyloläthan, Trimethylolpropan, Pentaerythrit, Dipentaerythrit und Ditrimethylolpropan.

Die mehrwertigen aromatischen Carbonsäuren (B) sind beispielsweise ausgewählt aus den isomeren Phthalsäuren Ortho-, Iso- und Terephthalsäure, den isomeren Naphthalindicarbonsäuren, der 4,4'-Sulfonyldibenzoesäure und der Diphenyläther-4,4'-dicarbonsäure. Auch Tricarbonsäuren wie Trimellithsäure, Hemimellithsäure und Trimesinsäure können verwendet werden, vorzugsweise in Mischung mit einer Dicarbonsäure, deren Anteil größer als der der Tricarbonsäure ist. Die Verbindungen (B) werden einzeln oder im Gemisch in einer Menge von 2 bis 40 %, bevorzugt 4 bis 30 %, eingesetzt. Besonders bevorzugt werden Gemische von Iso- und Terephthalsäure.

Gegebenenfalls werden bis zu 40 % cyclische Alkenyldicarbonsäureanhydride (C) als weitere Säurekomponente eingesetzt. Bevorzugt werden Alkenylbernsteinsäureanhydride, beispielsweise Dodecenylbernsteinsäureanhydrid, in einer Menge von 10 bis 40 %, besonders bevorzugt 15 bis 30 %.

Die mehrwertigen aliphatischen Carbonsäuren (D) sind ausgewählt aus den aliphatischen und cycloaliphatischen linearen und verzweigten Di- und Polycarbonsäuren. Geeignete lineare aliphatische Dicarbonsäuren sind Malonsäure, Bernsteinsäure, Glutarsäure, Adipinsäure und höhere Homologe, bevorzugt werden Malon- und Adipinsäure. Unter den cycloaliphatischen Dicarbonsäuren wird Cyclohexandicarbonsäure bevorzugt. Die Verbindungen (D) werden in einem Anteil von 10 bis 30 %, bevorzugt 15 bis 25 %, eingesetzt.

Die aliphatischen Hydroxysäuren (E) haben zwei bis zehn C-Atome und enthalten mindestens je eine Hydroxy- und Carboxylgruppe, bevorzugt mindestens eine Carboxylgruppe und zwei Hydroxygruppen. Geeignete Verbindungen sind beispielsweise Glykolsäure, Milchsäure, Dihydroxybernsteinsäure, Weinsäure, Äpfelsäure und Dimethylolpropionsäure. Sie werden in Mengen von 0 bis 15 %, bevorzugt 5 bis 10 %, eingesetzt.

Die aliphatischen Polyamine (F) haben 4 bis 15 C-Atome und jeweils mindestens eine primäre und mindestens eine sekundäre oder tertiäre Aminogruppe. Bevorzugt werden Amine mit einer tertiären Aminogruppe, besonders bevorzugt einer Dimethylaminogruppe. Geeignet sind zum Beispiel N,N-Dimethyläthylen-, -propylen-und-butylendiamin, N-Aminoäthylpiperidin, N-Aminoäthylmorpholin, N-Aminoäthylpiperazin und N-Aminopropylmorpholin. Die Polyamine werden in Mengen von 2 bis 15, eingesetzt.

Die Glycidylverbindungen (G) sind vorzugsweise aliphatischer Natur und sind ausgewählt aus den Glycidylestern verzweigter aliphatischer Monocarbonsäuren mit 5 bis 12 C-Atomen wie beispielsweise den von Shell Chemicals erhältlichen Typen ®Cardura E5 und E10, und den Glycidyläthern verzweigter aliphatischer Alkohole wie 2-Äthylhexanol, tert.-Butanol, Isoamylalkohol und Isodecylalkohol. Die Glycidylverbindungen werden in Mengen von 0 bis 15 %, bevorzugt 5 bis 10 %, eingesetzt.

Die Polyhydroxyamine (H) sind organische primäre, sekundäre oder tertiäre Mono- oder Polyamine, die mindestens eine, bevorzugt zwei oder mehr Hydroxygruppen enthalten. Besonders bevorzugt sind tertiäre Amine mit zwei Hydroxygruppen. Geeignete Polyhydroxyamine sind vor allem aliphatische Polyhydroxyamine wie N-Alkyl-N,N-bishydroxyalkylamine wie N-Methyldiäthanolamin oder N-Propyldiäthanolamin, Tris-hydroxyalkylamine wie Triäthanolamin, N,N-Bis-(2-hydroxyäthyl)-isopropanolamin und Tripropanolamin, N,N,N',N'-Tetrakis-hydroxyalkyl-alkylendiamine wie N,N,N',N'-Tetrakis-hydroxyäthyl-äthylendiamin (THEED) oder N,N,N',N'-Tetrakis-2-hydroxypropyl-äthylendiamin, Pentakis-hydroxyalkyldialkylentriamine wie Diäthylentriamin-pentaäthanol, cyclische Hydroxyamine wie 2,6-Bis(hydroxymethyl)-pyridin, N,N'-Bis-(2-hydroxyäthyl)-piperazin, N,N-Bis-(2-hydroxyäthyl)-p-phenylendiamin, 2,5-Bis-(hydroxymethyl)-pyrrolidin und N-Methyl-2,5-bis-(hydroxymethyl)-pyrrolidin. Besonders bevorzugt sind N-Methyldiäthanolamin und Triäthanolamin. Die Polyhydroxyamine (H) werden in einer Menge von 0 bis 15 %, bevorzugt 0 bis 10 %, eingesetzt.

Die erfindungsgemäßen Polyester-Dispersionen werden beispielsweise hergestellt, indem in der ersten Stufe die Verbindungen (A), (B) und gegebenenfalls (C) und (H) unter Zusatz eines Umesterungskatalysators in Lösung oder bevorzugt in Masse verestert werden, das Reaktionswasser wird ausgekreist oder über eine Kolonne abdestilliert. Dabei wird die Temperatur langsam gesteigert, bis eine Säurezahl von weniger als 15 mg KOH/g, bevorzugt unter 10 mg KOH/g, erreicht ist. Nach Abkühlen auf 120 bis 180 °C wird die Polycarbonsäure (D) und die Hydroxysäure (E) zugefügt, die Temperatur wird langsam auf 180 bis 210 °C gesteigert und die Kondensation wieder bis zu einer Säurezahl unter 35, bevorzugt unter 15 mg KOH/g fortgeführt. Dazu kann ein leichtes Vakuum von 30 bis 100 mbar angelegt werden.

Nach Abkühlen auf 120 bis 180 °C und Belüften mit Stickstoff wird die Komponente (F) sowie gegebenenfalls die Komponente (H) zugefügt, soweit sie primäre oder sekundäre Aminogruppen enthält, die Masse wird solange unter Rühren umgesetzt, bis eine Aminzahl von 25 bis 35 mg KOH/g erreicht ist. Gegebenenfalls wird die Komponente (G) nebst einem weiteren Umesterungskatalysator nach Abkühlen auf ca. 100 °C zugesetzt. Bei einer Temperatur unter 100 °C wird mit Ameisensäure neutralisiert und durch Zugabe von Wasser auf einen Feststoffgehalt von ca. 30 bis 35 % eingestellt.

In einer anderen Ausführungsform werden die Komponenten (A) bis (E) und (H) gemeinsam einer Veresterungsreaktion unterworfen, danach erfolgt in zwei weiteren Stufen zuerst die Umsetzung mit dem Polyamin (F) sowie gegebenenfalls dem Hydroxyamin (H) und danach mit der Glycidylkomponente (G).

Die erfindungsgemäßen Polyester-Lösungen werden analog zu den Dispersionen hergestellt. Man verzichtet jedoch auf den Neutralisationschritt und die folgende Wasserzugabe. Stattdessen wird nach Abkühlen in einem Lösungsmittel gelöst, das mit Wasser mischbar und gegenüber dem Polyester inert ist. Bevorzugt werden Halbäther von aliphatischen Diolen eingesetzt, wie Methoxyäthanol oder Methoxypropanol. Gleichfalls geeignet sind Oligoäthylenglykol-Mono-Methyl- oder -Äthyläther. Besonders bevorzugt wird Methoxypropanol.

Die erfindungsgemäßen Polyester-Dispersionen und -Lösungen können als Additiv in ETL-Bädern verwendet werden. Sie werden üblicherweise in einer Menge von 0,1 bis 5 %, berechnet als Festharz bezogen auf die Masse der Badflüssigkeit zugegeben. Der Zusatz der erfindungsgemäßen Polyester zu einem üblichen Kataphorese-Bad enthaltend kathodisch abscheidbare Bindemittel bewirkt eine Zunahme der Schichtdicke bei gleicher Abscheidespannung und -zeit gegenüber einem ansonsten gleiche Bad ohne diesen Zusatz. Bei der Beschichtung von feuerverzinkten oder galvanisch verzinkten Blechen werden die sonst auftretenden Oberflächenstörungen unterdrückt. Wegen der verbesserten Schichtbildungseigenschaften der mit dem erfindungsgemäßen Polyester modifizierten Kataphorese-Bäder können zum Erreichen der Soll-Schichtdicke auch niedrigere Spannungen angelegt werden. Dies senkt den Energieverbrauch und gleichzeitig die Neigung zur Bildung von Oberflächenstörungen.

Die erfindungsgemäßen Elektrotauchlackbäder enthalten weiter alle hierfür üblichen Bindemittel, Vernetzer, Pigmente, Katalysatoren und Additive. Als Bindemittel kommen beispielsweise in Frage selbst- oder bevorzugt fremdvernetzende kationische aminmodifizierte Epoxidharze.

Unter kationischen aminmodifizierten Epoxidharzen werden kationische Reaktionsprodukte aus gegebenenfalls modifizierten Polyepoxiden, primären und/oder sekundären Aminen bzw. deren Salzen und/oder Salzen von tertiären Aminen und gegebenenfalls Polyolen, Polycarbonsäuren, Polyaminen oder Polysulfiden verstanden.

Vorzugsweise kommen als Bindemittel jedoch kationische Aminourethanharze in Frage, wie sie in EP-A 0 274 721, EP-A 0 272 665 und EP-A 234 395 beschrieben sind.

Soweit diese Bindemittel nicht selbstvernetzend sind, werden als Vernetzungsmittel Phenoplaste, polyfunktionelle Mannichbasen, Melaminharze, Benzoguanaminharze oder blockierte Polyisocyanate eingesetzt.

Die Herstellung von Pigmentpasten ist allgemein bekannt (vgl. D.H. Parker, Principles of Surface Coating Technology, Interscience Publishers, New York (1965); R.L. Yates, Electropainting, Robert Draper Ltd., Teddington/England (1966); H.F. Payne, Organic Coating Technology, Band 2, Wiley and Sons, New York (1961)). Die Pigmentpasten können im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Calciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidylrot und hydratisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß das fertige Elektrotauchlackbad die für die Abscheidung erforderlichen Eigenschaften aufweist. In den meisten Fällen beträgt das Massenverhältnis zwischen Pigment und kathodisch abscheidbarem Kunstharz 0,05 bis 0,5.

Die erfindungsgemäßen Polyester werden bei der Lackzubereitung zugesetzt.

Die erfindungsgemäßen Elektrotauchlackbäder können neben dem kathodisch abscheidbaren Kunstharz, der Pigmentpaste und dem erfindungsgemäßen Polyester noch weitere übliche Zusatzstoffe enthalten, wie z.B. Zusatzlösungsmittel, Antioxidantien, oberflächenaktive Mittel usw.

Der Festkörpergehalt der erfindungsgemäßen Elektrotauchlackbäder beträgt vorzugsweise 7 bis 35 %, besonders bevorzugt 12 bis 25 %. Der pH-Wert der Elektrotauchlackbäder liegt zwischen 4 und 8, vorzugsweise zwischen 5 und 7,5.

Die erfindungsgemäßen Elektrotauchlackbäder lassen sich zum Überziehen von beliebigen elektrisch leitenden Substraten, insbesondere aber zum Überziehen von Metallen, wie Stahl, Aluminium, Kupfer und dergleichen verwenden. Der Stahl kann verzinkt, phosphatiert oder nicht-phosphatiert sein.

Die Erfindung betrifft auch ein Verfahren zum Beschichten elektrisch leitfähiger Substrate, bei dem das Substrat in ein wäßriges Elektrotauchlackbad, das mindestens ein kathodisch abscheidbares Kunstharz enthält, eingetaucht wird, das Substrat als Kathode geschaltet wird, durch Gleichstrom ein Film auf dem Substrat abgeschieden wird, das Substrat aus dem Elektrotauchlack entfernt wird und der abgeschiedene Lackfilm eingebrannt wird.

Das Verfahren ist dadurch gekennzeichnet, daß das wäßrige Elektrotauchlackbad einen Polyester enthält, wie eingangs definiert.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 und 40 °C, bevorzugt zwischen 25 und 35 °C liegen.

Die angelegte Spannung kann in einem großen Bereich schwanken und kann z.B. zwischen 2 und 1000 Volt liegen. Typischerweise wird aber mit Spannungen zwischen 50 und 500 Volt gearbeitet. Die Stromdichte liegt in der Regel zwischen etwa 10 und 3000 Ampere/m². Im Verlauf der Abscheidung fällt die Stromdichte ab.

Nach der Abscheidung wird der beschichtete Gegenstand abgespült und ist zum Einbrennen bereit.

Die abgeschiedenen Lackfilme werden im allgemeinen bei Temperaturen von 130 bis 200 °C über eine Zeitdauer von 10 bis 60 Minuten, vorzugsweise bei 150 bis 180 °C über eine Zeitdauer von 15 bis 30 Minuten, eingebrannt.

Die Erfindung wird durch die nachfolgenden Beispiele erläutert.

Alle Prozentangaben und Teileangaben bedeuten Massengehalte, %-Angaben sind so zu lesen, daß sie in der Summe 100 % ergeben.

### Beispiele

### Beispiel 1:

7,48 % Neopentylglykol, 2,88 % Trimethylolpropan, 4,31 % Terephthalsäure, 3,74 % Isophthalsäure und 0,02 % Dibutylzinnoxid werden vorgelegt und bis 185 °C erwärmt. Dabei wird das entstehende Reaktionswasser über eine Füllkörperkolonne abdestilliert. Die Guttemperatur wird langsam auf 205 °C erhöht, bis die Säurezahl des Harzes kleiner 10 mg KOH/g ist. Nach Abkühlen des Guts auf 150 °C wird 6,47 % Adipinsäure und 2,16 % Dimethylolpropionsäure zugegeben. Danach wird bei langsam steigender Temperatur, bis max. 195 °C, 1 Stunde weiterkondensiert. Nach Kühlen auf 155 °C wird so lange ein Vakuum von 50 mbar angelegt, bis die Säurezahl kleiner als 33 mg KOH/g ist. Nach Belüften mit Stickstoff wird 1,44 % Dimethylaminopropylamin zugegeben und bei 150 °C so lange gerührt, bis die Aminzahl 27,8 mg KOH/g erreicht hat. Nach Zugabe von 3,19 % Versaticsäureglycidylester und 0,02 % Cobaltoctanoat wird das Gut innerhalb 1 Stunde auf 100 °C gekühlt. Dabei sinkt die Säurezahl auf < 1 mg KOH/g ab. Sind 95 °C erreicht, wird 0,44 % 85 %ige Ameisensäure zugegeben und 10 min eingerührt. Danach wird mit 68 % entionisiertem Wasser dispergiert und auf den Endfeststoffgehalt von 32 % eingestellt. Man erhält eine weiße, feinteilige Dispersion, deren Polymer eine gewichtsmittlere Molmasse von 4880 g/mol hat.

### Beispiel 2:

9,82 % Neopentylglykol, 3,1 % Trimethylolpropan, 1,72 % Terephthalsäure, 4,01 % Isophthalsäure, 4,59 % Dodecenylbernsteinsäureanhydrid und 0,02% Dibutylzinnoxid werden vorgelegt und langsam auf 205 °C erwärmt. Das dabei entstehende Reaktionswasser wird über eine Füllkörperkolonne abdestilliert. Wenn die Säurezahl kleiner 10 mg KOH/g ist, wird auf 150 °C abgekühlt und 6,93 % Adipinsäure zugegeben. Bei erneut bis 205 °C steigender Temperatur wird solange kondensiert, bis die Säurezahl wieder kleiner 10 mg KOH/g ist. Danach wird unter einem Vakuum von 50 mbar so lange gerührt, bis die Säurezahl kleiner 1 mg KOH/g ist. Nach Belüften mit Stickstoff und Abkühlen auf 150 °C wird 1,81 % Dimethylaminopropylamin zugegeben und so lange gerührt, bis die Aminzahl 33 mg KOH/g erreicht hat. Danach wird auf 95 °C gekühlt und mit 0,52 % 85 %ige Ameisensäure neutralisiert und 10 min eingerührt. Mit 67,48 % entionisiertem Wasser wird dispergiert und auf den Feststoffgehalt von 32 % eingestellt.

### Beispiel 3:

23,63 % Neopentylglykol, 7,47 % Trimethylolpropan, 4,13 % Terephthalsäure, 9,66 % Isophthalsäure, 11,04 % Dodecenylbernsteinsäureanhydrid und 0,03 % Dibutylzinnoxid werden vorgelegt und langsam auf 205 °C erwärmt. Das dabei entstehende Reaktionswasser wird über eine Füllkörperkolonne abdestilliert. Sobald die Säurezahl unter 10 mg KOH / g gesunken ist, wird auf 150 °C gekühlt und 16,69 % Adipinsäure werden zugegeben. Bei erneut bis 205 °C steigender Temperatur wird weiter kondensiert, bis die Säurezahl unter 10 mg KOH / g gesunken ist. Danach wird unter einem Vakuum von 50 mbar solange weiter gerührt, bis die Säurezahl unter 1 mg KOH / g gesunken ist. Nach Belüften mit Stickstoff und Abkühlen auf 150 °C wird 4,35 % Dimethylaminopropylamin zugegeben und so lange weiter gerührt, bis die Aminzahl 33 mg KOH / g erreicht hat. Nach Abkühlen auf Raumtemperatur wird in Methoxypropanol zu einer 77 %igen Lösung gelöst.

### Beispiel 4:

### Herstellung einer wäßrigen Bindemitteldispersion

4.1 Analog dem Europäischen Patent EP-B 0 000 086, Beispiel 31, wurde ein Epoxidaminaddukt wie folgt hergestellt:
210 Teile Diäthanolamin, 102 Teile N,N-Dimethylaminopropylamin und 636 Teile eines Adduktes aus 1 mol 2-Methylpentamethylendiamin und 2 mol Glycidylester der Versaticsäure (Cardura® E10 von Shell) werden zu 3400 Teilen BisphenolA-Epoxidharz (Molmasse pro Epoxidgruppe "Epoxid-Äquivalentgewicht" ca. 480 g/mol) in 2341 Teilen Methoxypropanol-2 (ca. 65%ig) gegeben. Das Reaktionsgemisch wurde 4 Stunden unter Rühren bei 60 bis 90°C und dann eine Stunde bei 120 °C gehalten.
Hydroxylzahl: ca. 155 mg KOH/g Festharz
Aminzahl : ca. 77 mg KOH/g Festharz

4.2 Herstellung der (teil-)verkappten Polyisocyanate
4.2.1 Zu 174 Teilen Desmodur® T80 (80% 2,4-, 20% 2,6-Toluylendiisocyanat; ca. 1 mol) werden bei 40 bis 60 °C während 60 bis 120 min 124 Teile (1,05 mol) Butylglykol und 0,3 Teile Dibutylzinnlaurat (DBTL) einlaufen gelassen und anschließend bis zu einem NCO-Gehalt von ca. 12,8 bis 13,5 % bei dieser Temperatur gehalten.
4.2.2 Zu 298 Teilen der Verbindung 4.2.1. in 146 Teilen Toluol werden portionsweise 42,4 Teile Trimethylolpropan eingebracht und bei 80 °C bis zu einem NCO-Gehalt von praktisch 0 umgesetzt (ca. 70%ig, 51% TDI).
4.3 Herstellung der Bindemitteldispersion
[A] Teile (siehe nachfolgende Tabelle 1) Harzlösung (4.1.) werden mit [B] Teilen Härterlösung (4.2.2.), 5 Teilen ®Texanol, 1,5 Teilen 2-Äthylhexanol und 2,3 Teilen 50%iger wäßriger Ameisensäure (MEQ25) vermischt und im Vakuum (bis zu 20 mbar) bei Temperaturen bis zu 80 °C auf ca. 90% Festkörper eingeengt. Anschließend werden mit 139 Teilen entionisiertem Wasser bei guter Rührung die beiden folgenden 40 %igen Dispersionen hergestellt:

**Tabelle 1**

| Bindemittel-Dispersion | [A] | [B] | zahlenmittlere Teilchengröße | gewichtsmittlere Teilchengröße | TDI-Gehalt im Bindemittel |
|---|---|---|---|---|---|
| | Teile | Teile | nm | nm | % |
| 4.4 | 123,7 | 28,0 | 240 | 560 | 10,0 |
| 4.5 | 120,6 | 32,7 | 216 | 500 | 12 |

### Beispiel 5:

### Herstellung einer Pigmentpaste

Es wird eine Dibutylzinnoxid-enthaltende Katalysatorpaste hergestellt nach folgendem Rezept:

Es werden 30 g Äthoxypropanol, 3 g Netzmittel, 2 g Essigsäure (100 %) und 40 g Dibutylzinnoxid in einem Dissolver gemischt und 2 Stunden bei 50 bis 60 °C dispergiert. Dann werden 60 g eines Anreibeharzes nach EP-A 0 183 025 Beispiel 3 (55 %ig) zugefügt und dann 64 g voll entsalztes Wasser. Nach einer Homogenisierung wird die Mischung auf einer geeigneten Mühle in zwei Mahlgängen auf die notwendige Kornfeinheit vermahlen.

Es werden 10,6 Teile Bindemittel nach Beispiel 4.4,0,6 Teile Essigsäure (50%ig), 0,6 Teile 2,4,7,9-Tetramethyl-5-decin-4,7-diol (®Surfynol 104, Netzmittel) und 12,3 Teile der Katalysatorpaste miteinander vermischt. Dazu werden unter Rühren 4,0 Teile Bleisilikat, 0,4 Teile Ruß und 40,2 Teile Titandioxid gegeben. Man stellt mit 31,3 Teilen VE-Wasser auf eine geeignete Viskosität ein und vermahlt die Pigmentpaste auf einer entsprechenden Mühle auf eine ausreichende Korngröße.

### Beispiel 6:

### Lackzubereitung

300 Teile Bindemittel-Dispersion (40%ig), gemäß Beispiel 4.4 werden mit 180 Teilen VE-Wasser unter Rühren auf ca. 25 % Festkörpergehalt verdünnt. Diese Klarlacklösung wird mit 109 Teilen Pigmentpaste gemäß Beispiel 5 und 1,2 Teilen 50 %iger Ameisensäure versetzt. Anschließend wird mit VE-Wasser auf einen Festkörpergehalt von ca. 18 % eingestellt. Pigment-Bindemittelverhältnis ca. 0,4:1.

### Abscheidung/Abscheidungsergebnisse:

Die Lackzubereitungen werden der kataphoretischen Abscheidung in einem offenen Glasgefäß unterworfen. Als Kathode dienen verzinkte Substrate und als Anode, im Abstand von 5 bis 10 cm von der Kathode, blankes Stahlblech. Die Badtemperatur beträgt 28 °C, die Abscheidedauer beträgt 2 Minuten. Die Rührung erfolgt durch einen PTFE-beschichteten Magnetrührstab.

Zu der Lackzubereitung werden von dem erfindungsgemäßen Additiv gemäß Beispiel 1 jeweils 0, 0,5 bzw. 1,0 % Festharz bezogen auf die Badmasse gegeben.

Die jeweils angelegten Spannungen, die erzielten Filmdicken und die Oberflächenqualität der abgeschiedenen und anschließend gehärteten Filme (Einbrenndauer 20 min, Ofentemperatur von 165 °C) sind in der nachstehenden Tabelle 2 wiedergegeben.

**Tabelle 2**

| **Verwendung von feuerverzinkten Stahlblechen (Rb 24/NL 60)** | | | |
|---|---|---|---|
| | Schichtdicke in µm | | |
| Spannung in Volt | Lackzubereitung ohne Zugabe | Zugabe von 0,5 % Polyester | Zugabe von 1,0 % Polyester |
| 225 | 10 | 11 | 15,5 |
| 250 | 12,5 | 15 | 19 |
| 275 | 15 (O) | 18 | 22 |

| | | | |
|---|---|---|---|
| O = Oberflächenstörungen | | | |

**Tabelle 3**

| **Verwendung von elektrolytisch verzinkten Stahlblechen (Rb 26/NL 60)** | | | |
|---|---|---|---|
| | Schichtdicke in µm | | |
| Spannung in Volt | Lackzubereitung ohne Zugabe | Zugabe von 0,5 % Polyester | Zugabe von 1,0 % Polyester |
| 225 | 12 | 12,5 | 15 |
| 250 | 15 | 18 | 20 |
| 275 | 20 (O) | 22 | 25 |

| | | | |
|---|---|---|---|
| O = Oberflächenstörungen | | | |

Der Zusatz der erfindungsgemäßen Polyester-Dispersion bewirkt bei konstanter Abscheidespannung gegenüber dem unmodifizierten Beschichtungsmittel eine deutliche Zunahme der Schichtdicke, umgekehrt läßt sich die gewünschte Schichtdicke schon mit einer niedrigeren Abscheidespannung erreichen. Während mit dem unmodifizierten Beschichtungsmittel schon bei 275 V bereits Oberflächenstörungen auftreten, lassen sich erheblich dickere Schichten ohne Oberflächenstörungen mit dem erfindungsgemäß modifizierten Beschichtungsmittel erreichen.

## Patentansprüche

1. Polyester erhältlich durch Umsetzung von
(A) 5 bis 50 Teilen mindestens eines linearen oder verzweigten aliphatischen oder cycloaliphatischen mindestens zweiwertigen Alkohols,
(B) 2 bis 40 Teilen mindestens einer mindestens zweiwertigen aromatischen Carbonsäure,
(C) 0 bis 40 Teilen mindestens eines 2-Alkenyl-dicarbonsäureanhydrids,
(D) 10 bis 30 Teilen mindestens einer mindestens zweiwertigen linearen oder verzweigten aliphatischen Carbonsäure,
(E) 0 bis 15 Teilen einer aliphatischen linearen oder verzweigten Hydroxysäure,
(F) 2 bis 15 Teilen eines aliphatischen linearen oder verzweigten Polyamins mit mindestens einer primären und mindestens einer sekundären oder tertiären Aminogruppe,
(G) 0 bis 15 Teilen eines Glycidylesters einer verzweigten aliphatischen Monocarbonsäure oder eines Glycidyläthers eines verzweigten aliphatischen Alkohols, und
(H) 0 bis 15 Teilen Polyhydroxyamin, wobei die Anteile der Komponenten so zu wählen sind, daß die Summe der Massenanteile stets 100 bzw. 100 % ist.

2. Polyester nach Anspruch 1, dadurch gekennzeichnet, daß die Verbindungen (A) ausgewählt sind aus den linearen aliphatischen Diolen (A1), den verzweigten aliphatischen Diolen (A2), den cycloaliphatischen Diolen (A3), den drei- oder mehrwertigen linearen aliphatischen Alkoholen (A4) und den drei- oder mehrwertigen verzweigten aliphatischen und cycloaliphatischen Alkoholen (A5) mit jeweils bis zu 20 C-Atomen.

3. Polyester nach Anspruch 1, dadurch gekennzeichnet, daß der Massenanteil der Verbindungen A, die einzeln oder in Mischung von mehreren Verbindungen eingesetzt werden können, 5 bis 50 %, vorzugsweise 10 bis 45 %, besonders bevorzugt 15 bis 40 % beträgt.

4. Polyester nach Anspruch 1, dadurch gekennzeichnet, daß die Verbindungen (A) ausgewählt sind aus den Gruppen der linearen aliphatischen Diole (A1), der verzweigten aliphatischen Diole (A2), der cycloaliphatischen Diole (A3), der drei- oder mehrwertigen linearen aliphatischen Alkohole (A4) und der drei- oder mehrwertigen verzweigten aliphatischen und cycloaliphatischen Alkohole (A5) mit jeweils bis zu 15 C-Atomen.

5. Polyester nach Anspruch 2, dadurch gekennzeichnet, daß die Verbindungen (A1) lineare aliphatische Diole mit 2 bis 16 C-Atomen sind.

6. Polyester nach Anspruch 2, dadurch gekennzeichnet, daß die verzweigten aliphatischen Diole (A2) mit 4 bis 16 C-Atomen ausgewählt sind aus der Gruppe Isobutylenglykol, Neopentylglykol, Pinakol, 3-Methyl-1,2-butandiol und 3,4-Diäthyl-3,4-hexandiol.

7. Polyester nach Anspruch 2, dadurch gekennzeichnet, daß die Komponente (A4) ausgewählt ist aus Glycerin, Erythrit, Arabit, Adonit, Xylit, Mannit, Sorbit, Perseit und Volemit.

8. Polyester nach Anspruch 2, dadurch gekennzeichnet, daß die Komponente (A3) ausgewählt ist aus Cyclohexandiol, Cyclohexandimethanol oder perhydriertem Bisphenol A.

9. Polyester nach Anspruch 2, dadurch gekennzeichnet, daß die mehrwertigen verzweigten aliphatischen Alkohole (A5) ausgewählt sind aus Trimethyloläthan, Trimethylolpropan, Pentaerythrit, Dipentaerythrit und Ditrimethylolpropan.

10. Polyester nach Anspruch 1, dadurch gekennzeichnet, daß die mehrwertigen aromatischen Carbonsäuren (B) ausgewählt sind aus den isomeren Phthalsäuren Ortho-, Iso- und Terephthalsäure, den isomeren Naphthalindicarbonsäuren, der 4,4'-Sulfonyldibenzoesäure und der Diphenyläther-4,4'-dicarbonsäure und den Tricarbonsäuren Trimellithsäure, Hemimellithsäure und Trimesinsäure, wobei die Tricarbonsäuren vorzugsweise in Mischung mit einer Dicarbonsäure eingesetzt werden, deren Anteil größer als der der Tricarbonsäure ist.

11. Polyester nach Anspruch 1, dadurch gekennzeichnet, daß als Komponente (B) Gemische von Iso- und Terephthalsäure eingesetzt werden.

12. Polyester nach Anspruch 1, dadurch gekennzeichnet, daß als Komponente (C) 2-Dodecenylbernsteinsäureanhydrid eingesetzt wird.

13. Polyester nach Anspruch 1, dadurch gekennzeichnet, daß die mehrwertigen aliphatischen Carbonsäuren (D) ausgewählt sind aus den aliphatischen und cycloaliphatischen linearen und verzweigten Di- und Polycarbonsäuren.

14. Polyester nach Anspruch 1, dadurch gekennzeichnet, daß als Komponente (D) lineare aliphatische Dicarbonsäuren aus der Gruppe Malonsäure, Bernsteinsäure, Glutarsäure, Adipinsäure, Korksäure und Sebacinsäure ausgewählt werden.

15. Polyester nach Anspruch 1, dadurch gekennzeichnet, daß Cyclohexandicarbonsäure als Komponente (D) eingesetzt wird.

16. Polyester nach Anspruch 1, dadurch gekennzeichnet, daß die aliphatischen Hydroxysäuren (E) zwei bis zehn C-Atome haben und mindestens je eine Hydroxy- und Carboxylgruppe enthalten.

17. Polyester nach Anspruch 1, dadurch gekennzeichnet, daß als Komponente (E) eine oder mehrere der Säuren Glykolsäure, Milchsäure, Dihydroxybernsteinsäure, Weinsäure, Äpfelsäure und Dimethylolpropionsäure eingesetzt werden.

18. Polyester nach Anspruch 1, dadurch gekennzeichnet, daß als Komponente (F) aliphatische Polyamine mit 4 bis 15 C-Atomen und jeweils mindestens einer primären und mindestens einer sekundären oder tertiären Aminogruppe eingesetzt werden.

19. Polyester nach Anspruch 1, dadurch gekennzeichnet, daß als Komponente (F) eine oder mehrere der Verbindungen N,N-Dimethyläthylen-, -propylen-und -butylendiamin, N-Aminoäthylpiperidin, N-Aminoäthylmorpholin, N-Aminoäthylpiperazin und N-Aminopropylmorpholin eingesetzt werden.

20. Polyester nach Anspruch 1, dadurch gekennzeichnet, daß als Komponente (G) aliphatische Glycidylverbindungen (G) eingesetzt werden, ausgewählt aus den Glycidylestern verzweigter aliphatischer Monocarbonsäuren mit 5 bis 12 C-Atomen und den Glycidyläthern verzweigter aliphatischer Alkohole.

21. Polyester nach Anspruch 1, dadurch gekennzeichnet, daß als Komponente (H) ein oder mehrere Polyhydroxyamine eingesetzt werden, ausgewählt aus den primäre, sekundäre oder tertiären Mono- und Polyaminen, die mindestens eine Hydroxygruppe enthalten.

22. Polyester nach Anspruch 1, dadurch gekennzeichnet, daß als Komponente (H) ein oder mehrere tertiäre Polyhydroxyalkylamine eingesetzt werden.

23. Wäßrige Polyester-Dispersionen, enthaltend Polyester nach Anspruch 1.

24. Polyester-Lösungen, enthaltend Polyester nach Anspruch 1 und ein Lösungsmittel, das mindestens ein organisches, mit Wasser mischbares Lösungsmittel und gegebenenfalls Wasser enthält.

25. Polyester-Lösungen nach Anspruch 24, dadurch gekennzeichnet, daß als Lösungsmittel Halbäther von aliphatischen Diolen eingesetzt werden.

26. Verfahren zur Herstellung wäßriger Polyester-Dispersionen nach Anspruch 23, dadurch gekennzeichnet, daß in der ersten Stufe die Komponenten (A), (B), (C) und (H) in Substanz oder in einem inerten Lösungsmittel gelöst unter Zusatz eines Katalysators verestert werden, in der zweiten Stufe die Komponenten (D) und (E) gemeinsam mit dem Reaktionsprodukt der ersten Stufe verestert werden, in der dritten Stufe nach Zugabe der Komponente (F) die Carbonsäuregruppen des Reaktionsproduktes aus Stufe 2 zu Amidgruppen umgesetzt werden, und schließlich in der vierten Stufe noch vorhandene Carbonsäuregruppen mit den Glycidylgruppen der Komponente (G) reagieren, wonach der erhaltene Hydroxy- und Aminogruppen-haltige Polyester nach Neutralisation in Wasser dispergiert wird.

27. Verfahren zur Herstellung wäßriger Polyester-Dispersionen nach Anspruch 26, dadurch gekennzeichnet, daß in der zweiten Stufe unter einem verminderten Druck von 30 bis 100 mbar gearbeitet wird.

28. Verfahren zur Herstellung wäßriger Polyester-Dispersionen nach Anspruch 26, dadurch gekennzeichnet, daß mit der Komponente (G) ein weiterer Umesterungskatalysator zugesetzt wird, der von dem Katalysator der ersten Stufe verschieden sein kann.

29. Verfahren zur Herstellung von Polyester-Lösungen nach Anspruch 24, dadurch gekennzeichnet, daß in der ersten Stufe die Komponenten (A), (B), (C) und (H) in Substanz oder in einem inerten Lösungsmittel gelöst unter Zusatz eines Katalysators verestert werden, in der zweiten Stufe die Komponenten (D) und (E) gemeinsam mit dem Reaktionsprodukt der ersten Stufe verestert werden, in der dritten Stufe nach Zugabe der Komponente (F) die Carbonsäuregruppen des Reaktionsproduktes aus Stufe 2 zu Amidgruppen umgesetzt werden, und schließlich in der vierten Stufe noch vorhandene Carbonsäuregruppen mit den Glycidylgruppen der Komponente (G) reagieren, wonach der erhaltene Hydroxy- und Aminogruppen-haltige Polyester in einem mit Wasser mischbaren Lösungsmittel gelöst wird.

30. Verwendung von Polyestern nach Anspruch 1 als Mittel zur Unterdrückung von Oberflächenstörungen bei der elektrophoretischen Beschichtung von verzinkten Blechen.

31. Verwendung von Polyestern nach Anspruch 1 als Mittel zur Herabsetzung der Abscheidespannung bei der elektrophoretischen Beschichtung von verzinkten Blechen.

32. Elektrophorese-Tauchlackbäder, enthaltend Polyester gemäß Anspruch 1.

33. Verfahren zum Beschichten von verzinkten Blechen mittels eines elektrophoretischen Beschichtungsverfahrens, dadurch gekennzeichnet, daß das Elektrophoresebad einen Polyester gemäß Anspruch 1 enthält.

## Claims

1. A polyester which is obtainable by reacting
(A) from 5 to 50 parts of at least one linear or branched, aliphatic or cycloaliphatic, at least dihydric alcohol,
(B) from 2 to 40 parts of at least one at least dibasic, aromatic carboxylic acid,
(C) from 0 to 40 parts of at least one 2-alkenyldicarboxylic anhydride,
(D) from 10 to 30 parts of at least one at least dibasic, linear or branched, aliphatic carboxylic acid,
(E) from 0 to 15 parts of an aliphatic, linear or branched hydroxy acid,
(F) from 2 to 15 parts of an aliphatic, linear or branched polyamine having at least one primary and at least one secondary or tertiary amino group,
(G) from 0 to 15 parts of a glycidyl ester of a branched, aliphatic monocarboxylic acid or of a glycidyl ether of a branched, aliphatic alcohol, and
(H) from 0 to 15 parts of polyhydroxyamine, the proportions of the components being selected such that the sum of the mass fractions is always 100 or 100 %.

2. A polyester as claimed in claim 1, wherein the compound (A) is selected from the linear, aliphatic dials (A1), the branched, aliphatic dials (A2), the cycloaliphatic dials (A3), the trihydric or polyhydric, linear, aliphatic alcohols (A4) and the trihydric or polyhydric, branched, aliphatic and cycloaliphatic alcohols (A5) having in each case up to 20 carbon atoms.

3. A polyester as claimed in claim 1, wherein the mass fraction of the compound (A), which may be employed individually or as a mixture of two or more compounds, is from 5 to 50 %, preferably from 10 to 45 %, and particularly preferably from 15 to 40 %.

4. A polyester as claimed in claim 1, wherein the compound (A) is selected from the group consisting of the linear, aliphatic dials (A1), the branched, aliphatic dials (A2), the cycloaliphatic diols (A3), the trihydric or polyhydric, linear, aliphatic alcohols (A4) and the trihydric or polyhydric, branched, aliphatic and cycloaliphatic alcohols (A5) having in each case up to 15 carbon atoms.

5. A polyester as claimed in claim 2, wherein the compound (A1) is a linear, aliphatic dial having from 2 to 16 carbon atoms.

6. A polyester as claimed in claim 2, wherein the branched, aliphatic dial (A2) having from 4 to 16 carbon atoms is selected from the group consisting of isobutylene glycol, neopentylglycol, pinacol, 3-methyl-1,2-butanediol and 3,4-diethyl-3,4-hexanediol.

7. A polyester as claimed in claim 2, wherein component (A4) is selected from glycerol, erythritol, arabitol, adonitol, xylitol, mannitol, sorbitol, perseitol and volemitol.

8. A polyester as claimed in claim 2, wherein component (A3) is selected from cyclohexanediol, cyclohexanedimethanol or perhydrogenated bisphenol A.

9. A polyester as claimed in claim 2, wherein the polyhydric, branched, aliphatic alcohol (A5) is selected from trimethylolethane, trimethylolpropane, pentaerythritol, dipentaerythritol and ditrimethylolpropane.

10. A polyester as claimed in claim 1, wherein the polybasic, aromatic carboxylic acid (B) is selected from the isomeric phthalic acids orthophthalic, isophthalic and terephthalic acid, the isomeric naphthalenedicarboxylic acids, 4,4'-sulfonyldibenzoic acid and diphenyl ether 4,4'-dicarboxylic acid and the tricarboxylic acids trimellitic, hemimellitic and trimesic acid, the tricarboxylic acids preferably being employed as a mixture with a dicarboxylic acid whose proportion is greater than that of the tricarboxylic acid.

11. A polyester as claimed in claim 1, wherein the component (B) employed is a mixture of isophthalic and terephthalic acid.

12. A polyester as claimed in claim 1, wherein the component (C) employed is 2-dodecenylsuccinic anhydride.

13. A polyester as claimed in claim 1, wherein the polybasic, aliphatic carboxylic acid (D) is selected from aliphatic and cycloaliphatic, linear and branched, di- and polycarboxylic acids.

14. A polyester as claimed in claim 1, wherein component (D) is selected from linear, aliphatic dicarboxylic acids from the group consisting of malonic acid, succinic acid, glutaric acid, adipic acid, suberic acid and sebacic acid.

15. A polyester as claimed in claim 1, wherein cyclohexanedicarboxylic acid is employed as component (D).

16. A polyester as claimed in claim 1, wherein the aliphatic hydroxy acid (E) has from two to ten carbon atoms and in each case at least one hydroxyl and one carboxyl group.

17. A polyester as claimed in claim 1, wherein the component (E) employed comprises one or more of the acids glycolic acid, lactic acid, dihydroxysuccinic acid, tartaric acid, malic acid and dimethylolpropionic acid.

18. A polyester as claimed in claim 1, wherein the component (F) employed is an aliphatic polyamine having from 4 to 15 carbon atoms and in each case at least one primary and at least one secondary or tertiary amino group.

19. A polyester as claimed in claim 1, wherein the component (F) employed comprises one or more of the compounds N,N-dimethylethylenediamine, N,N-dimethylpropylenediamine and N,N-dimethylbutylenediamine, N-aminoethylpiperidine, N-aminoethylmorpholine, N-aminoethylpiperazine and N-aminopropylmorpholine.

20. A polyester as claimed in claim 1, wherein the component (G) employed is an aliphatic glycidyl compound (G) selected from the glycidyl esters of branched, aliphatic monocarboxylic acids having from 5 to 12 carbon atoms and the glycidyl ethers of branched, aliphatic alcohols.

21. A polyester as claimed in claim 1, wherein the component (H) employed comprises one or more polyhydroxyamines selected from primary, secondary or tertiary mono- and polyamines containing at least one hydroxyl group.

22. A polyester as claimed in claim 1, wherein the component (H) employed comprises one or more tertiary polyhydroxyalkylamines.

23. An aqueous polyester dispersion comprising a polyester as claimed in claim 1.

24. A polyester solution comprising a polyester as claimed in claim 1 and a solvent which comprises at least one organic water-miscible solvent and, if desired, water.

25. A polyester solution as claimed in claim 24, wherein the solvent employed is a half-ether of an aliphatic diol.

26. A process for the preparation of an aqueous polyester dispersion as claimed in claim 23, which comprises in the first step esterifying components (A), (B), (C) and (H) in bulk or in solution in an inert solvent, with the addition of a catalyst, in the second step esterifying components (D) and (E) together with the reaction product from the first step, in the third step reacting the carboxyl groups of the reaction product from step 2, after addition of component (F), to form amide groups, and finally in the fourth step reacting the remaining carboxyl groups with the glycidyl groups of component (G), and subsequently dispersing the resulting hydroxy- and amino-containing polyester in water, after neutralization.

27. The process for the preparation of an aqueous polyester dispersion as claimed in claim 26, wherein the second step is carried out under a reduced pressure of from 30 to 100 mbar.

28. The process for the preparation of an aqueous polyester dispersion as claimed in claim 26, wherein together with component (G) a further transesterification catalyst is added, which may be different from the catalyst in the first step.

29. A process for the preparation of a polyester solution as claimed in claim 24, which comprises in the first step esterifying components (A), (B), (C) and (H) in bulk or in solution in an inert solvent, with the addition of a catalyst, in the second step esterifying components (D) and (E) together with the reaction product from the first step, in the third step reacting the carboxyl groups of the reaction product from step 2, after addition of component (F), to form amide groups, and finally in the fourth step reacting the remaining carboxyl groups with the glycidyl groups of component (G), and subsequently dissolving the resulting hydroxy- and amino-containing polyester in a water-miscible solvent.

30. The use of a polyester as claimed in claim 1 as an agent for suppressing surface defects in the electrophoretic coating of zinc-coated metal panels.

31. The use of a polyester as claimed in claim 1 as an agent for reducing the deposition voltage in the electrophoretic coating of zinc-coated metal panels.

32. An electrophoretic deposition coating bath comprising a polyester as claimed in claim 1.

33. A process for coating zinc-coated metal panels by means of an electrophoretic coating procedure, wherein the electrophoresis bath comprises a polyester as claimed in claim 1.

## Revendications

1. Polyesters que l'on peut obtenir par réaction
(A) de 5 à 50 parties d'au moins un alcool cycloaliphatique ou aliphatique linéaire ou ramifié au moins bifonctionnel,
(B) de 2 à 40 parties d'au moins un acide carboxylique aromatique au moins bifonctionnel,
(C) de 0 à 40 parties d'au moins un anhydride 2-alcényldicarboxylique,
(D) de 10 à 30 parties d'au moins un acide carboxylique aliphatique linéaire ou ramifié au moins bifonctionnel,
(E) de 0 à 15 parties d'un hydroxyacide aliphatique linéaire ou ramifié,
(F) de 2 à 15 parties d'une polyamine aliphatique linéaire ou ramifiée avec au moins un groupe amino primaire et au moins un groupe amino secondaire ou tertiaire,
(G) de 0 à 15 parties d'un ester glycidylique d'un acide monocarboxylique aliphatique ramifié ou d'un éther glycidylique d'un alcool aliphatique ramifié, et
(H) de 0 à 15 parties de polyhydroxyamine, les taux des constituants devant être choisis de façon telle que la somme des taux massiques soit toujours de 100 respectivement de 100%.

2. Polyesters selon la revendication 1, caractérisés en ce que les composés (A) sont pris parmi les diols aliphatiques linéaires (A1), les diols aliphatiques ramifiés (A2), les diols cycloaliphatiques (A3), les alcools aliphatiques linéaires tri- ou multifonctionnels (A4) et les alcools cycloaliphatiques et aliphatiques ramifiés tri- ou multifonctionnels (A5), chacun comportant jusqu'à 20 atomes de carbone.

3. Polyesters selon la revendication 1, caractérisés en ce que le taux massique des composés A, que l'on peut employer seuls ou en mélange, est de 5 à 50%, de préférence de 10 à 45%, de manière particulièrement préférée de 15 à 40%.

4. Polyesters selon la revendication 1, caractérisés en ce que les composés (A) sont pris dans le groupe comportant des diols aliphatiques linéaires (A1), des diols aliphatiques ramifiés (A2), des diols cycloaliphatiques (A3), des alcools aliphatiques linéaires tri- ou multifonctionnels (A4) et des alcools cycloaliphatiques et aliphatiques ramifiés tri- ou multifonctionnels (A5) chacun comportant jusqu'à 15 atomes de carbone.

5. Polyesters selon la revendication 2, caractérisés en ce que les composés A1 sont des diols aliphatiques linéaires comportant de 2 à 16 atomes de carbone.

6. Polyesters selon la revendication 2, caractérisés en ce que les diols aliphatiques ramifiés (A2) comportant de 4 à 16 atomes de carbone sont pris dans le groupe comportant l'isobutylèneglycol, le néopentylglycol, le pinacol, le 3-méthyl-1,2-butane diol et le 3,4-diéthyl-3,4-hexane diol.

7. Polyesters selon la revendication 2, caractérisés en ce que le constituant (A4) est pris parmi la glycérine, l'érythritol, l'arabitol, l'adonitol, le xylitol, le mannitol, le sorbitol, le perséitol et le volémitol.

8. Polyesters selon la revendication 2, caractérisés en ce que le constituant (A3) est pris parmi le cyclohexane diol, le cyclohexane diméthanol ou le bisphénol A perhydrogéné.

9. Polyesters selon la revendication 2, caractérisés en ce que les alcools aliphatiques ramifiés multifonctionnels (A5) sont pris parmi le triméthyloléthane, le triméthylolpropane, le pentaérythritol, le dipentaérythritol et ditriméthylolpropane.

10. Polyesters selon la revendication 1, caractérisés en ce que les acides carboxyliques aromatiques multifonctionnels (B) sont pris parmi les acides phtaliques isomères, l'acide ortho-, l'acide iso- et l'acide téréphtalique, les acides naphtalène dicarboxyliques isomères, l'acide 4,4'-sulfonyldibenzoïque et l'acide diphényléther-4,4'-dicarboxylique et parmi les acides tricarboxyliques, l'acide trimellitique, l'acide hémimellitique et l'acide trimésique, les acides tricarboxyliques étant utilisés de préférence en mélange avec un acide dicarboxylique, dont la proportion est supérieure à celle de l'acide tricarboxylique.

11. Polyesters selon la revendication 1, caractérisés en ce qu'on utilise en tant que constituant (B) des mélanges d'acide iso- et d'acide téréphtalique.

12. Polyesters selon la revendication 1, caractérisés en ce qu'on utilise, en tant que composant (C), l'anhydride 2-dodecénylsuccinique.

13. Polyesters selon la revendication 1, caractérisés en ce que les acides carboxyliques aliphatiques multifonctionnels (D) sont pris parmi les acides di- et polycarboxyliques cycloaliphatiques et aliphatiques linéaires et ramifiés.

14. Polyesters selon la revendication 1, caractérisés en ce que les acides dicarboxyliques aliphatiques linéaires utilisés en tant que constituant (D), sont pris dans le groupe comportant l'acide malonique, l'acide succinique, l'acide glutarique, l'acide adipique, l'acide subérique et l'acide sébacique.

15. Polyesters selon la revendication 1, caractérisés en ce que l'acide cyclohexane dicarboxylique est utilisé en tant que constituant (D).

16. Polyesters selon la revendication 1, caractérisés en ce que les hydroxyacides aliphatiques (E) présentent 2 à 10 atomes de carbone et contiennent chacun au moins un groupe hydroxy et un groupe carboxyle.

17. Polyesters selon la revendication 1, caractérisés en ce qu'on utilise en tant que constituant (E) un ou plusieurs acides pris parmi l'acide glycolique, l'acide lactique, l'acide dihydroxysuccinique, l'acide tartrique, l'acide malonique et l'acide diméthylolpropionique.

18. Polyesters selon la revendication 1, caractérisés en ce qu'on utilise en tant que constituant (F) des polyamines aliphatiques comportant de 4 à 15 atomes de carbone et chacun au moins un groupe amino primaire et au moins un groupe amino secondaire ou tertiaire.

19. Polyesters selon la revendication 1, caractérisés en ce qu'on utilise en tant que constituant (F) un ou plusieurs composés suivants, la N,N-diméthyléthylène diamine, la N,N-diméthylpropylène diamine et la N,N-diméthylbutylène diamine, la N-aminoéthylpipéridine, la N-aminoéthylmorpholine, la N-aminoéthylpipérazine et la N-aminopropylmorpholine.

20. Polyesters selon la revendication 1, caractérisés en ce qu'on utilise en tant que constituant (G) des composés glycidyliques aliphatiques pris parmi les esters glycidyliques d'acides monocarboxyliques aliphatiques ramifiés comportant de 5 à 12 atomes de carbone et les éthers glycidyliques d'alcools aliphatiques ramifiés.

21. Polyesters selon la revendication 1, caractérisés en ce qu'on utilise en tant que constituant (H) une ou plusieurs polyhydroxyamines, prises parmi les mono- et les polyamines primaires, secondaires ou tertiaires, qui contiennent au moins un groupe hydroxyle.

22. Polyesters selon la revendication 1, caractérisés en ce qu'on utilise en tant que constituant (H) une ou plusieurs polyhydroxyalkylamines tertiaires.

23. Dispersions aqueuses de polyesters contenant des polyesters selon la revendication 1.

24. Solutions de polyesters contenant des polyesters selon la revendication 1 et un solvant, qui contient au moins un solvant organique miscible à l'eau et éventuellement de l'eau.

25. Solutions de polyesters selon la revendication 24, caractérisées en ce qu'on utilise, en tant que solvant, des hémiéthers de diols aliphatiques.

26. Procédé de préparation de dispersions aqueuses de polyesters selon la revendication 23, caractérisé en ce que, dans le premier stade, on estérifie les constituants (A), (B), (C) et (H) en substance ou dissous dans un solvant inerte en ajoutant un catalyseur, dans le second stade, on estérifie les constituants (D) et (E) conjointement avec le produit de réaction du premier stade, dans le troisième stade, après l'ajout du constituant (F), on transforme les groupes acide carboxylique du produit de réaction du deuxième stade en groupe amido, et finalement, dans le quatrième stade, les groupes acide carboxylique encore présents réagissent avec les groupes glycidyliques du constituant (G), puis, après neutralisation, on disperse dans l'eau le polyester obtenu contenant des groupes hydroxy et amino.

27. Procédé de préparation de dispersions aqueuses de polyesters selon la revendication 26, caractérisé en ce que dans le deuxième stade, on opère sous une pression réduite de 30 à 100 mbars.

28. Procédé de préparation de dispersions aqueuses de polyesters selon la revendication 26, caractérisé en ce qu'on ajoute avec le constituant (G) un autre catalyseur de transestérification, qui peut être différent du catalyseur du premier stade.

29. Procédé de préparation de dispersions aqueuses de polyesters selon la revendication 24, caractérisé en ce que, dans le premier stade, on estérifie les constituants (A), (B), (C) et (H) en substance ou dissous dans un solvant inerte en ajoutant un catalyseur, dans le deuxième stade, on estérifie les constituants (D) et (E) conjointement avec le produit de réaction du premier stade, dans le troisième stade, après l'ajout du constituant (F), on transforme les groupes acide carboxylique du produit de réaction du deuxième stade en groupe amido, et finalement, dans le quatrième stade, les groupes acide carboxylique encore présents réagissent avec les groupes glycidyliques du constituant (G), puis, après neutralisation, on dissout le polyester obtenu contenant des groupes hydroxy et amino dans un solvant miscible à l'eau.

30. Utilisation de polyesters selon la revendication 1 en tant qu'agent pour empêcher l'apparition de défauts superficiels dans le revêtement électrophorétique de tôles zinguées.

31. Utilisation des polyesters selon la revendication 1 en tant qu'agent pour réduire la tension de dépôt dans le revêtement électrophorétique de tôles zinguées.

32. Bains de peinture par électrodéposition contenant des polyesters selon la revendication 1.

33. Procédé de revêtement de tôles zinguées au moyen d'un procédé de revêtement électrophorétique, caractérisé en ce que le bain d' électrophorèse contient un polyester selon la revendication 1.
